# EUROPEAN PATENT APPLICATION

(11) **EP 2 993 823 A2**
(43) Date of publication of application: **09.03.2016**
(21) Application number: 15183877.8
(22) Date of filing: 04.09.2015
(51) Int. Cl.: H04L 12/24

(54) **NETWORK DEPLOYMENT**

(30) Priority: 08.09.2014 IN DE25562014
(71) Applicant: ALCATEL LUCENT, 92100 Boulogne-Billancourt (FR)
(72) Inventor: DESAI, Mayank, 560045 BANGALORE (IN); ANTONY, Saji, 560045 BANGALORE (IN)
(74) Representative: Sciaux, Edmond

(57) **Abstract**

Method for deployment of communication networks includes obtaining entity attribute data corresponding to a plurality of network entities associated with a communication network. The plurality of network entities may include physical entities, logical entities, and service entities. Further, the method includes defining association between at least one network entity and at least one other network entity based on one or more pre-defined association rules and the entity attribute data. The method also includes generating a network model, based on the defined association between the at least one network entity and the at least one other network entity, for deployment of the communication network. The network model represents association between the at least one network entity and the at least one other network entity.

## Description

### FIELD OF INVENTION

The present subject matter relates to communication networks and, particularly, but not exclusively, to deployment of communication networks.

### BACKGROUND

The term Operational Support Systems (OSS) generally refers to information processing systems that assist an organization in managing their communications networks. An OSS allows an organization to coordinate resources, processes and activities to design, build, operate and maintain communication networks. For example, an OSS may be implemented to perform management, network configuration, and fault management functionality for a telecommunication network.

Generally, activities relating to management of communication networks were carried out manually. However, with the advent of technology, various computing systems have been implemented by service providers to manage the operations of the communication networks. Generally, each of these systems behaves as a stand-alone system or a disparate functional unit and interoperability between different systems becomes challenging. Efforts are made to enable interoperability between different OSS systems.

### SUMMARY

This summary is provided to introduce concepts related to deployment of a communication network. This summary is not intended to identify essential features of the claimed subject matter nor is it directed to use in determining or limiting the scope of the claimed subject matter.

In an aspect, a method for deployment of communication networks is disclosed. The method may include obtaining entity attribute data corresponding to a plurality of network entities associated with a communication network. The plurality of network entities may include physical entities, logical entities, and service entities. Further, the method may include defining association between at least one network entity and at least one other network entity based on one or more pre-defined association rules and the entity attribute data. The method may also include generating a network model, based on the defined association between the at least one network entity and the at least one other network entity, for deployment of the communication network. The network model represents association between the at least one network entity and the at least one other network.

In another aspect, the present subject matter discloses a network deployment system. The network deployment system may include a processor, an association module coupled to the processor and a generation module coupled to the processor. The association module may obtain entity attribute data corresponding to a plurality of network entities associated with a communication network. The plurality of network entities may include physical entities, logical entities, and service entities. Further, the association module may define association between at least one network entity and at least one other network entity based on one or more pre-defined association rules and the entity attribute data. The generation module may then generate a network model, based on the defined association between the at least one network entity and the at least one other network entity, for deployment of the communication network. The network model represents association between the at least one network entity and the at least one other network entity.

In yet another aspect, a non-transitory computer readable medium having embodied thereon a computer program for executing a method for deployment of communication networks is disclosed. The method may include obtaining entity attribute data corresponding to a plurality of network entities associated with a communication network. The plurality of network entities may include physical entities, logical entities, and service entities. Further, the method may include defining association between at least one network entity and at least one other network entity based on one or more pre-defined association rules and the entity attribute data. The method may also include generating a network model, based on the defined association between the at least one network entity and the at least one other network entity, for deployment of the communication network. The network model represents association between the at least one network entity and the at least one other network entity.

### BRIEF DESCRIPTION OF THE FIGURES

The detailed description is described with reference to the accompanying figures. In the figures, the left-most digit(s) of a reference number identifies the figure in which the reference number first appears. The same numbers are used throughout the figures to refer features and components. Some embodiments of system and/or methods in accordance with embodiments of the present subject matter are now described, by way of example only, and with reference to the accompanying figures, in which:
Figure 1 illustrates a network deployment system for deployment of communication networks, in accordance with an embodiment of the present subject matter; and
Figure 2 illustrates a method for deployment of communication networks, in accordance with an embodiment of the present subject matter.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### DETAILED DESCRIPTION

Service providers, such as telecommunication service around the world use several Operation Support Systems (OSS) to manage their communication networks. The different OSS may not be interoperable, for instance to communicate data between themselves. For example, a system implemented by a service provider to manage order fulfillment and a system implemented for service assurance may not be interoperable. Each of these systems may have a different interface, and may follow different conventions and styles to represent data. Most of the time this leads to discrepancy between the interoperating systems.

Further, data provided to a system in a given format may be unsuitable for another system and therefore the same data may have to be fed into another system in another format. For example, a customer may place an order and specify details that may be stored in one system. A user, such as a designer is then required to feed the details provided by the customer in another system and then design a solution based on the customer's requirement. Such an approach involves a lot of time and effort to transfer data from one system to another. Moreover, maintenance of such redundant data becomes cumbersome over a period of time.

The present subject matter relates to a system and a method for deployment of communication networks. The system as described herein, referred to as a network deployment system, is capable of generating a network model for deployment of a communication network. In an example, the network model may represent a holistic view of the communication network.

According to an implementation of the present subject matter, entity attribute data corresponding to a plurality of network entities associated with a communication network is obtained. The network entities may include physical paths, physical links, physical equipments, logical paths, and terminations. In an example, the entity attribute data may be obtained from a service provider for whom the network model is to be generated. According to the example, the network entities may belong to different interoperating systems implemented by the service provider. Further, the network entities are obtained to define associations between the network entities. The network model represents network and service related information of the communication network that can be stored and maintained in a multi-network domain environment. For example, the network model may represent associations between the network entities. The network model may also represent the entity attribute data corresponding to the network entities. The service provider may utilize the network model for deployment of the communication network.

Upon obtaining the entity attribute data, an association may be defined between at least one network entity and at least one other network entity. In example, the association may be defined based on one or more pre-defined association rules and the entity attribute data. Each association rule may be indicative of a connection between two network entities. For instance, one or more association rules can be associated with each network entity, to indicate an association or dependence of that network entity with other network entities. In an example, the association between the at least one network entity and the at least one other network entity is indicative of a parent-child connection between the at least one network entity and the at least one other network entity.

Thereafter, a network model may be generated based on the defined association between the at least one network entity and the at least one other network entity. The network model may be utilized for deployment of the communication network. In an example, the network model represents association between the at least one network entity and the at least one other network entity. The network model may also represent the entity attribute data corresponding to the network entities. According to an implementation, upon generation of the network model, the network model may be provided to the service provider. The service provider may deploy its communication network using the network model. In an example, the service provider may perform network and service management using the network model.

According to the present subject matter, the network model represents physical, logical, and service level details of the communication network. Therefore, the network model provides a holistic view of the communication network. Also, the association and interaction between the network entities are appropriately captured in a single system, i.e., the network model. Therefore, the need of deploying multiple and different systems for managing the communication network is eliminated. As a result, capital and operational costs associated with deployment and management of the communication network is significantly mitigated.

It should be noted that the description merely illustrates the principles of the present subject matter. It will thus be appreciated that those skilled in the art will be able to devise various arrangements that, although not explicitly described herein, embody the principles of the present subject matter and are included within its spirit and scope. Moreover, all statements herein reciting principles, aspects, and embodiments of the subject matter, as well as specific examples thereof, are intended to encompass equivalents thereof.

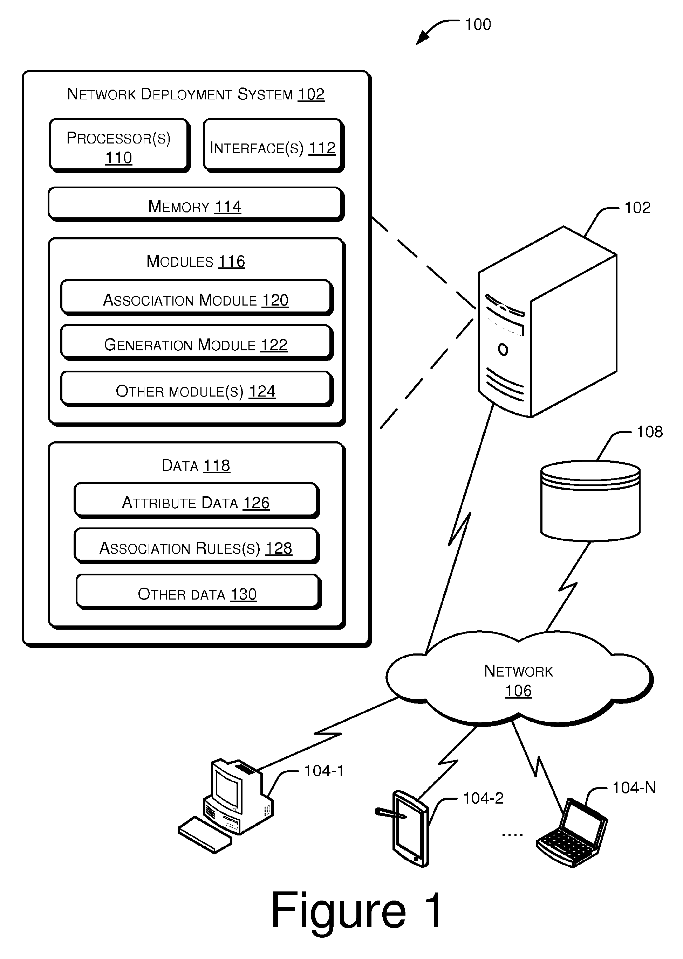

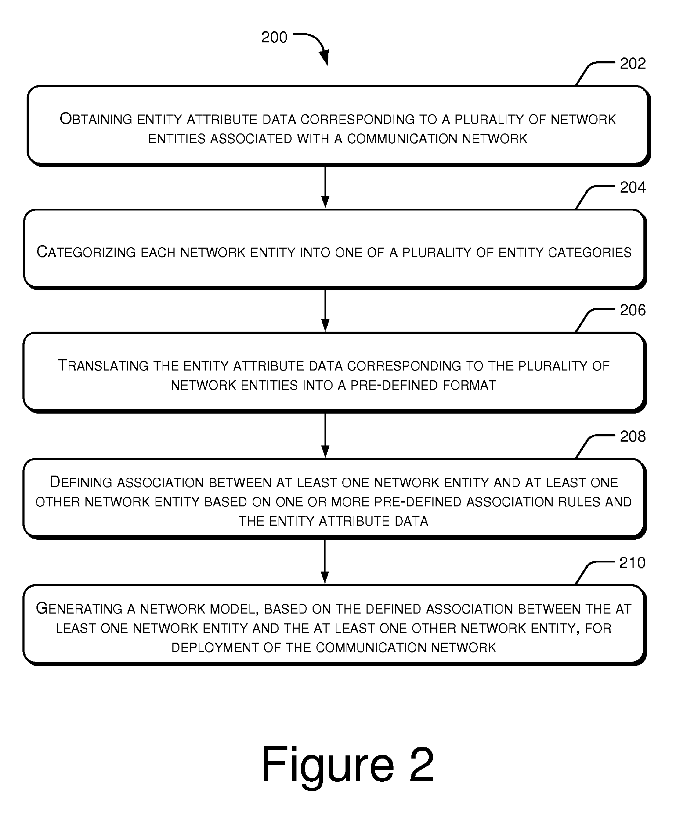

The manner in which the systems and methods shall be implemented has been explained in details with respect to the Figures 1 and 2. While aspects of described systems and methods can be implemented in any number of different computing systems, transmission environments, and/or configurations, the embodiments are described in the context of the following exemplary system(s).

Figure 1 illustrates a network deployment system 102 for deployment of communication networks, in accordance with an embodiment of the present subject matter. The network deployment system 102 is capable of generating a network model for deployment of a communication network. The network model may represent a holistic view of the communication network. In an example, the communication network may be a multi-domain communication network. The network deployment system 102 described herein, can be implemented in any network environment comprising a variety of network devices, including routers, bridges, servers, computing devices, storage devices, etc.

The network deployment system 102 can be implemented as a variety of servers and communication devices. The communication devices that can implement the described method(s) include, but are not limited to, central directory servers, database server, web server, application server, and the like. The network deployment system 102 may also be implemented as a computing device, such as a laptop computer, a desktop computer, a notebook, a workstation, a mainframe computer, a server, and the like.

In one implementation the network deployment system 102 is connected to one or more user devices 104-1, 104-2,..., 104-N, individually and collectively referred to as user device(s) 104 hereinafter, through a network 106. The user devices 104 may be implemented as, but are not limited to, desktop computers, laptops or other portable computers, tablet computers, and the like. Further, the user devices 104 may include devices capable of exchanging data with each other and the network deployment system 102 over the network 106 to provide connectivity to different communicating devices and computing systems. In an example, a user, such as a service provider may exchange data with the network deployment system 102 using the user device 104.

The network 106 may be a wireless or a wired network, or a combination thereof. The network 106 can be a collection of individual networks, interconnected with each other and functioning as a single large network (e.g., the internet or an intranet). Examples of such individual networks include, but are not limited to, Global System for Mobile Communication (GSM) network, Universal Mobile Telecommunications System (UMTS) network, Personal Communications Service (PCS) network, Time Division Multiple Access (TDMA) network, Code Division Multiple Access (CDMA) network, Next Generation Network (NGN), Public Switched Telephone Network (PSTN), and Integrated Services Digital Network (ISDN). Depending on the technology, the network 106 includes various network entities, such as gateways, and routers; however, such details have been omitted for ease of understanding.

In one implementation, the network deployment system 102 is communicatively coupled with a database 108 through the network 106. Further, the network deployment system 102 includes processor(s) 110. The processor 110 may be implemented as one or more microprocessors, microcomputers, microcontrollers, digital signal processors, central processing units, state machines, logic circuitries, and/or any devices that manipulate signals based on operational instructions. Among other capabilities, the processor(s) 110 is configured to fetch and execute computer-readable instructions stored in the memory.

The functions of the various elements shown in the figure, including any functional blocks labeled as "processor(s)", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), non-volatile storage. Other hardware, conventional and/or custom, may also be included.

The network deployment system 102 further includes interface(s) 112. The interfaces 112 may include a variety of software and hardware interfaces that allow the network deployment system 102 to interact with the entities of the network 106, or with each other. The interfaces 112 may facilitate multiple communications within a wide variety of networks and protocol types, including wire networks, for example, LAN, cable, etc., and wireless networks, for example, WLAN, cellular, satellite-based network, etc.

Further, the network deployment system 102 may include memory 114. The memory 114 may be coupled to the processor 110. The memory 114 can include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes.

Further, the network deployment system 102 may include module(s) 116 and data 118. The modules 116 and the data 118 may be coupled to the processors 110. The modules 116, amongst other things, include routines, programs, objects, components, data structures, etc., which perform particular tasks or implement particular abstract data types. The modules 116 may also be implemented as, signal processor(s), state machine(s), logic circuitries, and/or any other device or component that manipulate signals based on operational instructions.

Further, the modules 116 can be implemented in hardware, instructions executed by a processing unit, or by a combination thereof. The processing unit can comprise a computer, a processor, a state machine, a logic array or any other suitable devices capable of processing instructions. The processing unit can be a general-purpose processor which executes instructions to cause the general-purpose processor to perform the required tasks or, the processing unit can be dedicated to perform the required functions.

In another aspect of the present subject matter, the modules 116 may be machine-readable instructions (software) which, when executed by a processor/processing unit, perform any of the described functionalities. The machine-readable instructions may be stored on an electronic memory device, hard disk, optical disk or other machine-readable storage medium or non-transitory medium. In one implementation, the machine-readable instructions can be also be downloaded to the storage medium via a network connection.

In an implementation, the module(s) 116 includes an association module 120, a generation module 122, and other module(s) 124. The other module(s) 124 may include programs or coded instructions that supplement applications or functions performed by the network deployment system 102. In said implementation, the data 118 includes attribute data 126, association rule(s) 128, and other data 130. The other data 130 amongst other things, may serve as a repository for storing data that is processed, received, or generated as a result of the execution of one or more modules in the module(s) 116.

Although the data 118 is shown internal to the network deployment system 102, it may be understood that the data 118 can reside in an external repository (not shown in the figure), which may be coupled to the network deployment system 102. The network deployment system 102 may communicate with the external repository through the interface(s) 112 to obtain information from the data 118.

According to an implementation, the association module 120 of the network deployment system 102 may obtain entity attribute data corresponding to a plurality of network entities associated with a communication network. In an example, the entity attribute data may be obtained from a service provider who has to deploy the communication network. In another example, the entity attribute data may be directly obtained from one or more databases maintained and managed by various service providers. In an example, the communication network may be deployed in a multi-network domain environment. Examples of the network domain include Internet Protocol/Multiprotocol Label Switching (IP/MPLS) network domain and IP Multimedia Subsystem (IMS) network domain.

Further, examples of the network entities include, but are not limited to, network equipments, resources, links, logical terminations, paths, and services. In an example, the network equipments are physical elements, such as routers, switches, chassis of a router, racks, and multiplexers. Further, resources are components that are deployed within the network equipments. For example, shelves, slots, cards, and physical terminations are few resources that may be deployed with the network equipments. Links are physical connections that may be established between resources of two separate network equipments. For example, a link may be a physical connection between two router nodes.

Further, a logical termination is an entry or an exit point for a link from where traffic enters or exits the link for providing a service. In an example, the logical terminations are hosted by the network equipments. Moreover, paths are logical connections between two logical terminations and are deployed over a link. The traffic usually travels over the paths for carrying data between two network equipments. In an example, the services may include broadband services, Ethernet services, Virtual Leased Line (VLL) services, Virtual Private LAN (VPL) Services, and Virtual Private Routed Network (VPRN) services. The services are passed over the other network entities existing in a communication network for providing end-to-end services, such as Internet or VPN connectivity to users to users. According to an example implementation, the above mentioned network entities may be further classified as physical entities, logical entities, and service entities.

According to an example, entity attribute data for a network entity may include information related to the network entity. The information may include type of network entity, module information of the network entity, features of the network entity, identifier (ID) of the network entity, and specification of the network entity, such as name, version, state, and entity type. According to an implementation, the association module 120 may store the entity attribute data within the attribute data 126. The attribute data 126 may be updated, when required. For example, new entity attribute data may be added into the attribute data 126, existing entity attribute data may be modified, or non-useful entity attribute data may be deleted from the attribute data 126.

Subsequently, the association module 120 may categorize each network entity into one of a plurality of entity categories. In an example, the entity categories may be pre-defined by an administrator of the network deployment system 102. Few exemplary entity categories and their corresponding network entities are depicted in Table 1 (provided below).

**TABLE 1**

| **Entity Category** | **Network Entity** |
|---|---|
| Equipment category | Chassis |
| | Rack |
| | Shelf |
| | Slot |
| | Router |
| | Switch |
| | Multiplexer |
| Termination category | Physical port |
| | Logical Aggregation Group (LAG) |
| | Service Access Point (SAP) |
| | Spoke SDP binding |
| Link category | Physical link |
| Service category | Ethernet service |
| | Epipe service |
| | Broadband service |
| | Virtual Leased Line (VLL) service |
| | Virtual Private LAN (VPL) service |
| | Virtual Private Routed Network (VPRN) service |
| Path category | End-to-end service path |
| | Path between SAP and spoke SDP binding |

Thereafter, the association module 120 may translate the entity attribute data corresponding to the plurality of network entities into a pre-defined format. In an example, the format may be pre-defined by the service provider based on preference. The association module 120 may then define associations between at least one network entity and at least one other network entity. In an example, the association may be defined based on one or more pre-defined association rules and the entity attribute data. A pre-defined association rule is indicative of a connection between two network entities. The pre-defined association rules may include one or more rules or empirical conditions for defining associations between the network entities. In an example, one or more pre-defined association rules can be associated with each network entity, to indicate an association or dependence of that network entity with other network entity belonging to the same entity category as well as different entity categories.

Subsequently, association between network entities of the equipment category and network entities of the termination may be defined based on the pre-defined association rules. In addition, association between network entities of the same entity category may be defined based on the pre-defined association rules. For instance, association may be defined between the network entities belonging to the equipment category. In an example, all physical links may be associated with physical terminations, and all paths may be associated with physical or logical terminations. Further, all equipments may be associated with physical terminations.

According to an exemplary association rule, if name of a network entity is LAG termination, version is 1.0, type is Resource, and state of the network entity is active, then association may be defined between the LAG termination and a termination network entity that has version 1.0 and type is resource. In an example, the association between the at least one network entity and the at least one other network entity is indicative of a parent-child connection between the at least one network entity and the at least one other network entity. According to an implementation, the association module 120 may also define the associations across network domains.

Once the associations are defined, the generation module 122 may generate a network model for deployment of the communication network. The network model is generated based on the defined association between the at least one network entity and the at least one other network entity. In an example, the network model may represent association between the at least one network entity and the at least one other network entity. The network model may also represent the entity attribute data corresponding to the network entities. The network model represents physical, logical, and service level details of the communication network. According to an example, the network model represents network and service related data of the communication network in a domain independent manner. For example, the network model may represent details of physical components, such as chassis, rack, shelf, and port of a router deployed in an IP/MPLS network domain. As mentioned above, the entity attribute data is translated into a pre-defined format. Accordingly, the network model represents the entity attribute data based on the pre-defined format.

According to an implementation, the generation module 122 may store the network model for being used for deployment of the communication networks in the database 108. In an implementation, whenever the service provider has to deploy the communication network, the service provider may retrieve the network model from the database 108. Although the foregoing description has been described with reference to one service provider and one communication network, it is well appreciated that multiple service providers may utilize the network model for deployment of one or more communication networks in multi-network domain environment.

Figure 2 illustrates a method 200 for deployment of communication networks, in accordance with an embodiment of the present subject matter. The order in which the method 200 is described is not intended to be construed as a limitation, and any number of the described method blocks can be combined in any order to implement the method 200, or an alternative method. Additionally, individual blocks may be deleted from the method without departing from the spirit and scope of the subject matter described herein. Furthermore, the method can be implemented in any suitable hardware, software, firmware, or combination thereof.

The method(s) may be described in the general context of computer executable instructions. Generally, computer executable instructions can include routines, programs, objects, components, data structures, procedures, modules, functions, etc., that perform particular functions or implement particular abstract data types. The method may also be practiced in a distributed computing environment where functions are performed by remote processing devices that are linked through a communications network. In a distributed computing environment, computer executable instructions may be located in both local and remote computer storage media, including memory storage devices.

At block 202, entity attribute data corresponding to a plurality of network entities associated with a communication network is obtained. In an example, the entity attribute data may be obtained from a service provider who has to deploy the communication network. The network entities may include physical, logical, and service entities. Further, entity attribute data for a network entity may include information related to the network entity, such as type of network entity, module information of the network entity, features of the network entity, identifier (ID) of the network entity, and the like. In an example, the association module 120 of the network deployment system 102 may obtain the entity attribute data corresponding to the plurality of network entities.

At block 204, each network entity is categorized into one of a plurality of entity categories. Examples of the entity categories include, but are not limited to, an equipment category, a termination category, a link category, a service category, and a path category. In one example, network entities, such as rack, shelf, and chassis may be categorized into the equipment category. In another example, network entities, such as physical port, Logical Aggregation Group (LAG), and Service Access Point (SAP) may be categorized into the termination category. In an example, the association module 120 may categorize each network entity into one of the plurality of entity categories.

At block 206, the entity attribute data corresponding to the plurality of network entities is translated into a pre-defined format. According to an example, the format into which the entity attribute data is to be translated is defined by the service provider based on preference of the service provider. In an example, the association module 120 translates the entity attribute data corresponding to the plurality of network entities into the pre-defined format.

At block 208, association between at least one network entity and at least one other network entity is defined. According to an example, association between the network entities is defined based on one or more pre-defined association rules and the entity attribute data. The pre-defined association rules may include one or more rules or empirical conditions for defining associations between the network entities. In an example, one or more pre-defined association rules can be associated with each network entity, to indicate an association or dependence of that network entity with other network entity belonging to the same entity category as well as different entity category. In an implementation, the association module 120 may define the association between the network entities.

At block 210, a network model is generated based on the defined association between the at least one network entity and the at least one other network entity. In an example, the network model is generated for deployment of the communication network. The network model may represent association between the at least one network entity and the at least one other network entity. For instance, the network model represents physical, logical, and service level details of the communication network. According to an implementation, the generation module 122 of the network deployment system 102 may generate the network model based on the defined association between the at least one network entity and the at least one other network entity.

Although implementations for network deployment have been described in a language specific to structural features and/or methods, it is to be understood that the appended claims are not necessarily limited to the specific features or methods described. Rather, the specific features and methods are disclosed as exemplary implementations for network deployment.

## Claims

1. A network deployment system (102) comprising:
a processor (110);
an association module (120) communicatively coupled to the processor (110) to:
obtain entity attribute data corresponding to a plurality of network entities associated with a communication network, wherein the plurality of network entities includes physical entities, logical entities, and service entities;
define association between at least one network entity and at least one other network entity based on one or more pre-defined association rules and the entity attribute data; and
a generation module (122) communicatively coupled to the processor (110) to:
generate a network model, based on the defined association between the at least one network entity and the at least one other network entity, for deployment of the communication network, wherein the network model represents association between the at least one network entity and the at least one other network entity.

2. The network deployment system (102) as claimed in claim 1, wherein the association module (120) further is to categorize each network entity into one of a plurality of entity categories.

3. The network deployment system (102) as claimed in claim 2, wherein the plurality of entity categories includes an equipment category, a termination category, a link category, a service category, and a path category.

4. The network deployment system (102) as claimed in claim 1, wherein the association module (120) further is to translate the entity attribute data corresponding to the plurality of network entities into a pre-defined format.

5. The network deployment system (102) as claimed in claim 1, wherein the generation module (122) further is to store the network model for being used for deployment of one or more communication networks.

6. The network deployment system (102) as claimed in claim 1, wherein the association between the at least one network entity and the at least one other network entity is indicative of a parent-child connection between the at least one network entity and the at least one other network entity.

7. A method comprising:
obtaining entity attribute data corresponding to a plurality of network entities associated with a communication network, wherein the plurality of network entities includes physical entities, logical entities, and service entities;
defining association between at least one network entity and at least one other network entity based on one or more pre-defined association rules and the entity attribute data; and
generating a network model, based on the defined association between the at least one network entity and the at least one other network entity, for deployment of the communication network, wherein the network model represents association between the at least one network entity and the at least one other network entity.

8. The method as claimed in claim 7, wherein the communication network is deployed in a multi-network domain environment.

9. The method as claimed in claim 7, wherein the association between the at least one network entity and the at least one other network entity is indicative of a parent-child connection between the at least one network entity and the at least one other network entity.

10. The method as claimed in claim 7, wherein the method further comprises categorizing each network entity into one of a plurality of entity categories, wherein the plurality of entity categories includes an equipment category, a termination category, a link category, a service category, and a path category.

11. A non-transitory computer-readable medium having embodied thereon a computer program for executing a method comprising:
obtaining entity attribute data corresponding to a plurality of network entities associated with a communication network, wherein the plurality of network entities includes physical entities, logical entities, and service entities;
defining association between at least one network entity and at least one other network entity based on one or more pre-defined association rules and the entity attribute data; and
generating a network model, based on the defined association between the at least one network entity and the at least one other network entity, for deployment of the communication network, wherein the network model represents association between the at least one network entity and the at least one other network entity.

12. The non-transitory computer-readable medium as claimed in claim 11, wherein the method further comprises translating the entity attribute data corresponding to the plurality of network entities into a pre-defined format.

13. The non-transitory computer-readable medium as claimed in claim 11, wherein the at least one network entity and the at least one other network entity belong to same entity category.

14. The non-transitory computer-readable medium as claimed in claim 11, wherein the at least one network entity and the at least one other network entity belong to same entity category.

15. The non-transitory computer-readable medium as claimed in claim 11, wherein the association between the at least one network entity and the at least one other network entity is indicative of a parent-child connection between the at least one network entity and the at least one other network entity.
